**Europäisches Patentamt**

**European Patent Office**

**Office européen des brevets**

(11) Veröffentlichungsnummer: **0 353 407 B1**

(12) **EUROPÄISCHE PATENTSCHRIFT**

(45) Veröffentlichungstag der Patentschrift: **04.11.92**

(21) Anmeldenummer: **89108818.9**

(22) Anmeldetag: **17.05.89**

(51) Int. Cl.⁵: **F16C 33/49**, F16C 19/30

(54) **Kammkäfig für ein Grosswälzlager.**

(30) Priorität: **16.07.88 DE 3824279**

(43) Veröffentlichungstag der Anmeldung:
**07.02.90 Patentblatt 90/06**

(45) Bekanntmachung des Hinweises auf die
Patenterteilung:
**04.11.92 Patentblatt 92/45**

(84) Benannte Vertragsstaaten:
**DE ES FR GB IT SE**

(56) Entgegenhaltungen:
**DE-C- 935 288**
**FR-A- 1 288 961**
**US-A- 1 487 185**

**FAG Kugel- und Rollenlager Katalog 41.000,**
**Ausgabe 1965, Seite 131**

(73) Patentinhaber: **Hoesch Aktiengesellschaft**
**Eberhardstrasse 12**
**W-4600 Dortmund 1(DE)**

(72) Erfinder: **Bahr, Diethelm**
**Marktgasse 3**
**W-5632 Wermelskirchen 1(DE)**

## Beschreibung

Die Erfindung betrifft einen Kammkäfig nach dem Oberbegriff des Anspruchs 1.

Derartige Kammkäfige werden eingesetzt, um die Rollen auf der Laufbahn zu führen und eine gegenseitige Beeinträchtigung der Wälzbewegungen der Rollen zu verhindern.

Nach dem DE-U-19 89 631 ist es bekannt, zur Führung von Axial-Zylinder-rollenkränzen, die doppelreihig ausgeführt sind, Kammkäfige einzusetzen. Nach dieser Vorveröffentlichung schließen sich einseitig an den geschlossenen Ring bzw. das Ringsegment als Grundkörper des Kammkäfigs Kammstege an, die beide Rollenreihen führen. Gleitelemente bestimmen die Höhenlage derartiger Kammkäfige. Nachteilig bei dieser Ausbildung sind die Kammstege sehr lang und müssen zum Übertragen der eingeleiteten Kräfte verhältnismäßig dick ausgeführt werden. Zur Behebung dieser Nachteile werden häufig Käfige mit geschlossenen Taschen entsprechend der DE-C-22 42 432 eingesetzt, die jedoch nachteilig einen erhöhten radialen Platzbedarf haben. Mit dem gleichen Nachteil ist der Einsatz von zwei unabhängig voneinander wirkenden Kammkäfigen entsprechend der DE-A-15 75 425 behaftet.

Von daher liegt der Erfindung die Aufgabe zugrunde, einen Kammkäfig der eingangs genannten Art so auszubilden, daß mit geringstmöglichem Materialeinsatz eine gute Führung der Rollen erzielt wird.

Diese Aufgabe wird durch die im Kennzeichen des Anspruchs 1 angegebenen Merkmale gelöst. Vorteilhafte Ausbildungsformen der Erfindung sind in den kennzeichnenden Teilen der Unteransprüche beschrieben.

Die mit der Erfindung erzielten Vorteile bestehen insbesondere darin, daß die Rollen einzeln geführt werden. Unterschiedliche Drehzahlen der Rollen, die auf unterschiedlichen Durchmessern abwälzen, führen nicht zu bohrender Reibung der aneinanderliegenden Stirnflächen der benachbarten Wälzkörper. Weiterhin vorteilhaft kann bei geringem Materialeinsatz eine hohe Führungsfestigkeit des Käfigs erzielt werden. Darüber hinaus kann durch die geringe Stegdicke des Kammkäfigs eine hohe Anzahl von Wälzkörpern eingesetzt werden, was sich positiv auf das Tragvermögen des Lagers auswirkt. Bei konkaver Ausbildung der den Rollenmantelflächen zugeordneten Kammflächen, etwa in Höhe der Wälzachse der Rollen, wird vorteilhaft erreicht, daß der Kammkäfig direkt durch die Rollen geführt wird und keine zusätzliche Abstützung auf der Laufbahn erforderlich ist, womit auch eine geringere Reibung erzielt wird.

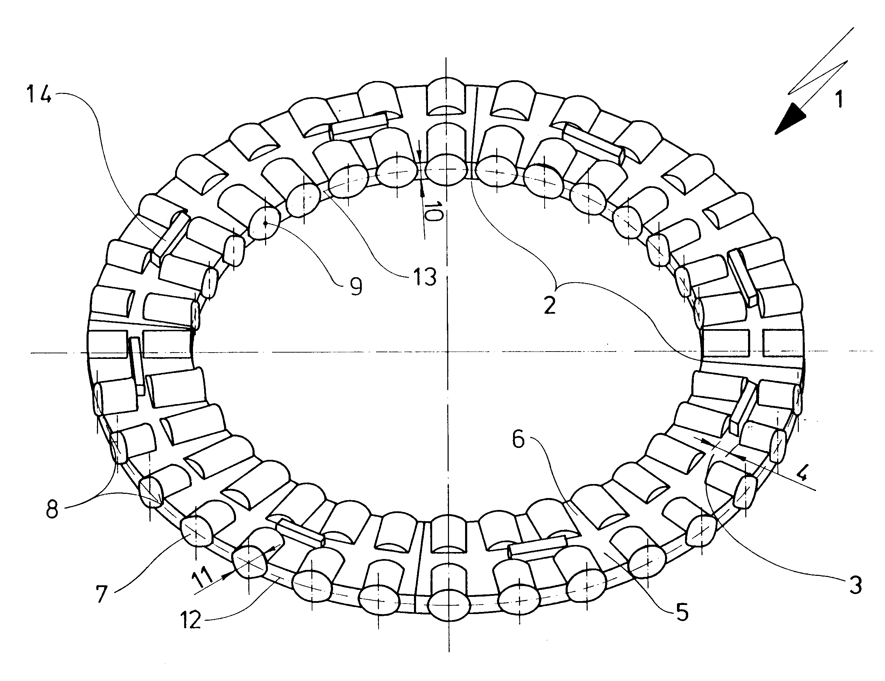

Ein Ausführungsbeispiel der Erfindung wird anhand der Zeichnung im folgenden näher beschrieben.

Der Kammkäfig 1 besteht aus 4 Ringsegmenten 2. An die jeweils ringsegmentförmigen, mittigen Bereiche 3 der Ringsegmente 2 mit einer durchgehenden Breite 4 sind beidseitig sich radial gegenüberliegend Kammstege 5, 6 angeordnet. Die Kammstege 5, 6 umfassen die Rollen 7 mit konkav ausgebildeten Kammflächen 8 etwa in Höhe der Wälzachse 9. Durch diese Ausbildung wird der Kammkäfig 1 durch die Rollen 7 geführt und getragen, da die Höhe 10 des Kammkäfigs 1 geringer ist als der Durchmesser 11 der Rollen 7.

Im Ausführungsbeispiel entspricht die Länge der Kammstege 5 der Rollenlänge, was jedoch für die Funktion nicht erforderlich ist. An den Bereichen 3 der Ringsegmente 2 sind beidseitig axial Führungsstücke 14 angeordnet, wobei die Höhe 10 des Kammkäfigs 1 und der Führungsstücke 14 insgesamt geringer ist als der Durchmesser 11 der Rollen 7. Diese Führungsstücke 14 sind dazu vorgesehen, den Kammkäfig 1 nicht mit seiner vollen Oberfläche auf der Laufbahn aufliegen zu lassen, wenn die Rollenführungen des Kammkäfigs 1 nach langem Gebrauch verschlissen sind, was den Schmierfilm zerstören würde. Nach einem weiteren Merkmal der Erfindung sind am Außendurchmesser 12 und/oder am Innendurchmesser 13 die Rollen 7 radial überragende Führungsstücke angeordnet, was nicht dargestellt ist.

Der Kammkäfig 1 wird durch bekannte Verfahren hergestellt. Bei der Herstellung aus gießfähigem Material wird er direkt gegossen. Weiterhin kann er durch spanlose Umformung wie Schmieden hergestellt werden oder die die Rollen 7 aufnehmenden Führungstaschen werden in spanender Bearbeitung aus einem Ring oder dem Ringsegment 2 hergestellt.

## Patentansprüche

1. Kammkäfig (1), bestehend aus einem kreisförmigen Ring oder Ringsegmenten (2), für einen axialen, doppelreihigen Zylinder-Rollenkranz eines mittenfreien Großwälzlagers, dadurch gekennzeichnet, daß an dem kreisförmigen Ring oder den Ringsegmenten (2) beidseitig radial gegenüberliegend rollenführende Kammstege (5, 6) angeordnet sind.

2. Kammkäfig nach Anspruch 1, dadurch gekennzeichnet, daß die jeweils der Rollenmantelfläche zugeordneten Kammflächen (8) konkav ausgebildet sind und die Rollen (7) etwa in Höhe der Wälzachse (9) umfassen.

3. Kammkäfig nach Anspruch 1 oder 2, dadurch gekennzeichnet, daß am Ring oder Ringsegment (2) ein- oder beidseitig axial Führungsstücke (14) angeordnet sind, wobei die Höhe (10) des Kammkäfigs (1) und Führungsstücke (14) insgesamt geringer als der Durchmesser (11) der Rollen (7) ist.

4. Kammkäfig nach einem oder mehreren der Ansprüche 1 bis 3, dadurch gekennzeichnet, daß am Außendurchmesser (12) und/oder Innendurchmesser (13) des Ringes bzw. Ringsegmentes (2) die Rollen (7) radial überragende Führungsstücke angeordnet sind.

## Claims

1. A slotted cage (1) comprising a circular ring or ring segments (2) for an axial, double row cylinder roller flange of a large roller bearing with clear centre, characterised in that radially opposite roller guiding slot lanes (5, 6) are arranged on both sides on the circular ring or ring segments (2).

2. A slotted cage as claimed in claim 1, characterised in that the surfaces (8) of the slots assigned to the lateral surfaces of the rollers in each case are designed with a concave shape and envelop the rollers (7) approximately at the height of the rolling axis (9).

3. A slotted cage as claimed in claim 1 or 2 characterised in that axial guide elements (14) are located on one or on both sides on the ring or ring segment (2), and the height (10) of the slotted cage (1) and guide elements (14) in total is smaller than the diameter (11) of the rollers (7).

4. A slotted cage as claimed in one or several of the claims 1 to 3, characterised in that guide elements are arranged so as to project radially beyond the rollers (7) at the external diameter (12) and/or internal diameter (13) of the ring or ring segment (2).

## Revendications

1. Cage à doigts (1), formée d'une bague ou de segments de bague (2) de forme circulaire, pour une couronne de roulement axiale à deux rangées de rouleaux, d'un palier de roulement de grandes dimensions, à centre libre, caractérisée en ce que des doigts de séparation (5, 6) radiaux, de guidage des rouleaux, s'étendant des deux côtés, face à face, sont prévus sur la bague ou les segments (2) de bague de forme circulaire.

2. Cage à doigts selon la revendication 1, caractétérisée en ce que les surfaces des doigts (8) associées aux surfaces latérales des rouleaux sont concaves, et englobent les rouleaux (7) sensiblement à hauteur de l'axe de roulement (9).

3. Cage à doigts selon la revendication 1 ou 2, caractérisée en ce que des pièces de guidage axial (14) sont prévues d'un côté ou des deux côtés, sur la bague ou le segment de bague (2), tandis que la hauteur (10) de la cage à doigts (1) et des pièces de guidage (14) est globalement inférieure au diamètre (11) des rouleaux (7).

4. Cage à doigts selon une ou plusieurs des revendications 1 à 3, caractérisée en ce que des pièces de guidage en saillie radiale par rapport aux rouleaux (7) sont prévues au diamètre externe (12) et/ou au diamètre interne (13) de la bague ou des segments de bague (2).

EP 0 353 407 B1